# EUROPEAN PATENT APPLICATION

(11) **EP 2 728 430 A2**
(43) Date of publication of application: **07.05.2014**
(21) Application number: 13189572.4
(22) Date of filing: 21.10.2013
(51) Int. Cl.: G05D 1/02

(54) **A system for coordinating the relative movements of an agricultural harvester and a cart**

(30) Priority: 31.10.2012 US 201213665046
(71) Applicant: Deere & Company, Moline, IL 61265-8098 (US)
(72) Inventor: Wenzel, Craig E, Chicago, IL Illinois 606082013 (US); Brockmann, William A, Cambridge, IA Iowa 50046 (US); Meinzen, Stephen E, Overland Park, KS Kansas 66213 (US); Hamor, Ryan B, Moline, IL Illinois 61265 (US); Gilmore, Brian J, Geneseo, IL Illinois 61254 (US)
(74) Representative: Holst, Sönke

(57) **Abstract**

A system for coordinating the relative movements of an agricultural harvester (104) and a cart (108) by electronically estimating an unload position at which it the agricultural harvester (104) should be unloaded, and electronically calculating a path for the cart (108) to follow to arrive at that unload position.

## Description

### Field

This invention relates to agricultural harvesting.

### Background

Traditional harvesting of crops involves an agricultural harvester traveling through the field severing the crop plants from the ground and storing the plants (or portions of the plant) in a storage structure part of the agricultural harvester. This storage structure is not large enough to carry an entire field's worth of harvested crop, and therefore must be emptied many times during the harvesting of every field.

Reference is made to the prior art described in WO 00/35265 A1 and : D. Bochtis et al. "Field Operation Planning for Agricultural Vehicles: A Hierarchical Modeling Framework". Agricultural Engineering International: the CIGR Ejournal. Manuscript PM 06 021. Vol. IX. February 2007 ( http://www.researchgate.net/publication/200494760_Field_Operation_Planning_for_Agricultural Vehicles_A_Hierarchical_Modeling_Framework).

During harvesting, time is of the essence. For this reason, agricultural harvesters are operated continuously as they travel through the field, not stopping for unloading or to drive to an unloading location.

A second vehicle travels alongside the agricultural harvester to receive crop from the storage structure even as the agricultural harvester is traveling through the field harvesting crop. Thus the second vehicle, often called a "cart", matches speed and location with the always-moving agricultural harvester as the agricultural harvester unloads crop from the storage structure into the cart.

Once the harvester is emptied, the cart leaves the side of the agricultural harvester and travels to an unloading location where it deposits the crop. It then returns to the side of the harvester to receive and ferry more crop to the unloading location. The process is repeated many times while a single field is harvested.

It is not easy, even for an experienced cart operator, to predict where the agricultural harvester will be when it next needs to be unloaded and to drive there just in time to unload the agricultural harvester. In one common practice the driver of the agricultural harvester and the driver of the cart are in radio contact, each informing the other of their anticipated locations in an attempt to synchronize the operation of their vehicles.

One common outcome is a too-early arrival of the cart at the agricultural harvester. The cart rushes to the side of the agricultural harvester, travels alongside for a distance and then is ready when the agricultural harvester needs unloading. This is inefficient. If the unloading location was known with accuracy, the cart could simply move to that location at a more efficient speed to arrive just as the unloading became necessary, thereby saving fuel for the cart.

Another outcome is a too-late arrival. The harvester fills up and no cart is present. The harvester then stops harvesting and waits stationary in the field until the cart arrives and unloading begins. This is an inefficient use of the agricultural harvester, delays harvesting and consumes unnecessary time and fuel during the wait.

What is needed is a better system for synchronizing the operation of the agricultural harvester and cart during unloading operations. It is an object of this invention to provide such a system.

### Summary

In accordance with one aspect, a system for coordinating the movements of an agricultural harvester and a cart by electronically estimating an unload position at which it the agricultural harvester should be unloaded, and electronically calculating a path for the cart to follow to arrive at that unload position.

In accordance with another aspect, lowercase system for coordinating the movements of an includes a first electronic control circuit on an agricultural harvester that is configured to receive status signals from sensors indicative of a physical status of the agricultural harvester , a first radio navigation receiver coupled to the first electronic control circuit , wherein the radio navigation receiver is configured to receive radio navigation signals and to provide a first location signal indicative of a current location of the agricultural harvester to the first electronic control circuit , a first radio transmitter/receiver coupled to the first electronic control circuit , wherein the first radio transmitter/receiver is configured to transmit first status data of the agricultural harvester , a second electronic control circuit on a cart configured to receive signals from sensors indicative of a physical status of the cart , and a second radio transmitter/receiver coupled to the second electronic control circuit , wherein the second radio transmitter/receiver is configured to receive the first status data from the first radio transmitter/receiver , wherein the second electronic control circuit is configured to calculate a path to be followed by the cart . The first status data may be derived from the first location signal.

The first status data may include a location of the agricultural harvester.

The first status data may include a predicted location of the agricultural harvester, wherein the predicted location is generated by the first electronic control circuit.

The first radio transmitter/receiver may be configured to sequentially transmit each of a plurality of first status data while the cart is traveling from an unload location to the agricultural harvester , the second radio transmitter/receiver maybe configured to sequentially receive each of said plurality of first status and to sequentially provide each of said plurality of first status data to the second electronic control circuit, and the second electronic control circuit maybe configured to calculate a new path for the cart to follow upon receipt of each of said plurality of first status data.

Each of a plurality of first status data may comprise sensor data at least indicative of an amount of crop in a storage structure of said agricultural harvester.

Each of a plurality of first status data may comprise data at least indicative of an actual position of said agricultural harvester in said field.

The first electronic control circuit may be configured to sequentially calculate a series of unload locations of said agricultural harvester and each of a plurality of first status data comprises data may be indicative of each location of said series of unload locations.

The first electric chronic control circuit may be configured to sequentially calculate the series of unload locations at the same time as said cart is traveling toward said agricultural harvester. The second electronic control circuit may be configured to calculate new driving directions for the operator in order to maintain the cart on said new path.

The second electronic control circuit may be configured to display the new driving directions on a visual display.

The second electronic control circuit may be configured to predict a new unload location of the agricultural harvester in response to receiving each of said plurality of first status data from the second radio transmitter/receiver.

The system may further comprise a steering actuator coupled to the second electronic control circuit and configured to steer the cart.

The second electronic control circuit may be configured to steer the cart along the path calculated by the second electronic control circuit.

### Brief Description of the Drawings

Figure 1 is a plan view of an agricultural field showing an agricultural harvester and cart.
Figure 2 illustrates an electronic control system and sensors for the agricultural harvester.
Figure 3 illustrates an electronic control system for the cart.
Figure 4 illustrates a flow chart of the system operation.
Figure 5 illustrates another flowchart of the system operation.

### Detailed Description

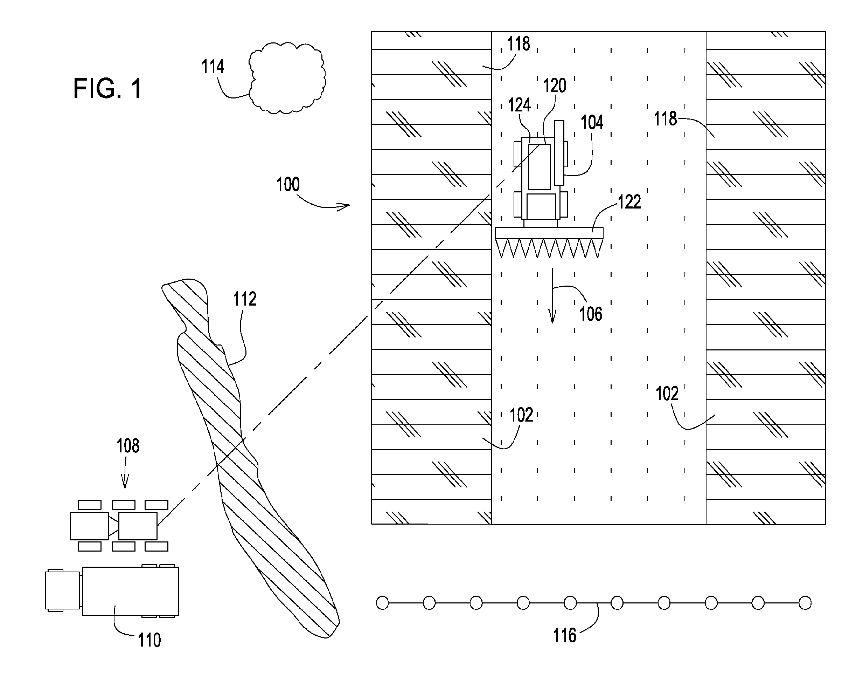

In Figure 1, a plan view of an agricultural field 100 is shown. Crop plants 102 are growing in the field. They're being harvested by an agricultural harvester 104. The agricultural harvester 104 follows a path 106 through the field. Once the agricultural harvester 104 has passed over a region of the field 100, and the field 100 is harvested, it becomes available for travel by a cart 108. The cart 108 cannot travel through regions of the field 100 that are not yet harvested, since travel by the cart 108 through the field 100 would destroy the crop plants 102 in the as yet unharvested regions of the field 100.

The cart 108 travels between the agricultural harvester 104 and a grain storage area 110, here shown as a grain truck. Alternatively, the grain storage area can be as simple as a pile on the ground, a stationary structure having walls such as a silo, tank, or bin, or movable structure, such as a cart, bin, wagon, or truck.

When the cart 108 arrives at the grain storage area, it unloads the crop that has accumulated from the agricultural harvester 104 and returns again to the agricultural harvester 104 to receive another load of crop.

To reach the agricultural harvester 104, the cart 108 must traverse the field, avoiding various natural hazards, such as standing water 112, or other barriers, such as trees 114, or even manmade barrier to such as fence lines 116, to the free movement of the cart 108, until it arrives at the agricultural harvester 104.

Unharvested regions 118 of the agricultural field 100 also constitute barriers. They are not constant barriers during harvesting, since they will eventually be harvested by the agricultural harvester 104, but nonetheless the cart 108 cannot travel through the unharvested regions 118 since such travel would destroy crops.

A typical agricultural harvester 104 is illustrated herein which comprises an agricultural harvesting vehicle 120. The harvester also comprises an agricultural harvesting head 122 fixed to the front of the agricultural harvesting vehicle 120 to sever the crop plants from the ground and send them to the agricultural harvesting vehicle 120. A storage structure 124 is coupled to the agricultural harvesting vehicle 120 to store at least a portion of the severed crop plants. Other portions of the severed crop plants may be stored in a separate storage structure or spread upon the ground.

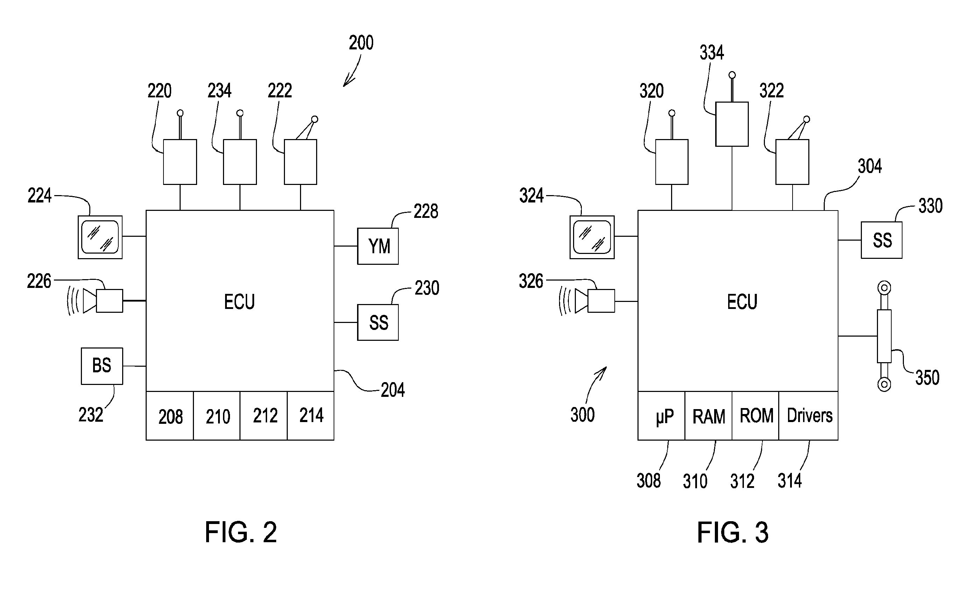

In Figure 2, a first configuration of electronic control circuit 200 and associated sensors 202 for agricultural harvester 104 is illustrated. Electronic control circuit 200 includes an ECU 204 that further comprises a digital microprocessor 208, a digital working memory (RAM) 210, and a digital static memory (ROM) 212. Driver circuits 214 are also provided that couple external devices such as sensors, other ECUs, and the equipment to be driven such as valves and actuators to electronic control circuit 200. In Figure 2, the arrangement is shown with a single ECU 204.

Alternatively, the system may be arranged such that the functions described herein for the various components in Figure 2 can be provided by multiple ECUs 204 coupled together using radio signals, serial or parallel communication buses. The term "ECU" therefore is defined to encompass a single ECU, or a plurality of ECUs on the agricultural harvester 104 that are coupled together using radio signals, serial, or parallel communication buses.

ECU 204 is coupled to a radio navigation receiver 220 to receive signals indicative of a location of the radio navigation receiver 220, and therefore also indicative of the location of the agricultural harvester 104 upon which the radio navigation receiver 220 is located. The radio navigation receiver 220 may be a GPS, Loran, GLONASS, or other radio navigation receiver currently existing or to be developed in the future.

ECU 204 is also coupled to an operator input device 222 which is provided to permit the operator to interact with and otherwise issue commands to the electronic control circuit 200. ECU 204 is also coupled to a visual display 224, which is provided to permit the electronic control circuit 200to communicate to the operator. The visual display 224 can be a CRT, an LCD display, a plasma display, or other display configured to generate visual indicia.

In addition, ECU 204 is also coupled to an annunciator 226 which is provided to permit the electronic control circuit 200 to communicate to the operator using sound. The annunciator can be a horn, a speaker, or other sound generating device.

ECU 204 is coupled to a yield monitor 228. Yield monitor 228 is configured to sense the amount of crop being harvested by the agricultural harvester 104. Yield monitor 228 generates a signal indicative of the rate at which crop is being harvested by the agricultural vehicle 104.

ECU 204 is coupled to a speed sensor 230. Speed sensor 230 is configured to sense the speed of the agricultural harvester 104 and to generate a signal indicative of the speed of the agricultural vehicle 104.

ECU 204 is coupled to a bin sensor 232. Bin sensor 232 is configured to sense the quantity of accumulated crop in the storage structure 124 (Figure 1) in which the agricultural harvester 104 stores the crop it harvests. As just one example, if the agricultural harvester 104 is a combine harvester this structure would be the grain tank or reservoir, and the bin sensor 232 would indicate the level of grain in the grain tank a reservoir.

ECU 204 is coupled to a radio transmitter/receiver 234. Radio transmitter/receiver 234 is provided to permit electronic control circuit 200 to transmit data regarding the status of the agricultural harvester 104, such as the location of the agricultural harvester 104, the previous path of agricultural harvester 104, the projected path of the agricultural harvester 104, the projected location of the agricultural harvester 104 when the level of crop in the storage structure 124 reaches a predetermined level, for example.

In Figure 3 a first configuration of electronic control circuit 300 and associated sensors for cart 108 is illustrated. Electronic control circuit 300 includes an ECU 304 that further comprises a digital microprocessor 308, a digital working memory (RAM) 310, and a digital static memory (ROM) 312. In addition are driver circuits 314 that are configured to couple to external devices such as sensors, other ECUs, and the equipment to be driven such as valves and actuators. In

Figure 3, the arrangement is shown with a single ECU 304.

Alternatively, the system may be arranged such that the functions described herein for the various components in Figure 3 can be provided by multiple ECUs 304 coupled together using radio signals, serial or parallel communication buses. The term "ECU" therefore is defined to encompass a single ECU, or a plurality of ECUs on the cart 108 that are coupled together using radio signals, serial, or parallel communication buses.

ECU 304 is coupled to a radio navigation receiver 320 to receive signals indicative of a location of the radio navigation receiver 320, and therefore also indicative of the location of the cart 108 upon which the radio navigation receiver 320 is located. The radio navigation receiver 320 may be a GPS, Loran, GLONASS, or other radio navigation receiver currently existing or to be developed in the future.

ECU 304 is also coupled to an operator input device 322 which is provided to permit the operator to interact with and otherwise issue commands to the electronic control circuit 300. ECU 304 is also coupled to a visual display 324, which is provided to permit the electronic control circuit 302 communicate to the operator. The visual display 324 can be a CRT, an LCD display, a plasma display, or other device capable of generating visual indicia for the operator.

In addition, ECU 304 is also coupled to an annunciator 326 which is provided to permit the electronic control circuit 300 to communicate to the operator using sound. The annunciator can be a horn, a speaker, or other sound generating device.

ECU 304 is coupled to a speed sensor 330. Speed sensor 330 is configured to sense the speed of the cart 108 and to generate a signal indicative of the speed of the cart 108.

ECU 304 is coupled to a radio transmitter/receiver 334. Radio transmitter/receiver 334 is provided to permit electronic control circuit 300 to receive data regarding the status of the agricultural harvester 104, such as the location of the agricultural harvester 104, the previous path of agricultural harvester 104, the projected path of the agricultural harvester 104, the projected location of the agricultural harvester 104 when the level of crop in storage structure 124 reaches a predetermined level, for example.

ECU 304 is also coupled to a steering actuator 350 that is, in turn, coupled to the wheels of the cart 108 to steer the cart 108 as it travels through the field. In one operating mode, ECU 304 is configured to control the steering actuator 350 as the cart 108 is driven through the agricultural field 100 to steer the cart through the field, and to ensure that the cart arrives at a projected unloading location in the agricultural field for agricultural harvester 104. In another operating mode, ECU 304 provides driving directions to the operator on visual display 324 and the driver steers the cart 108.

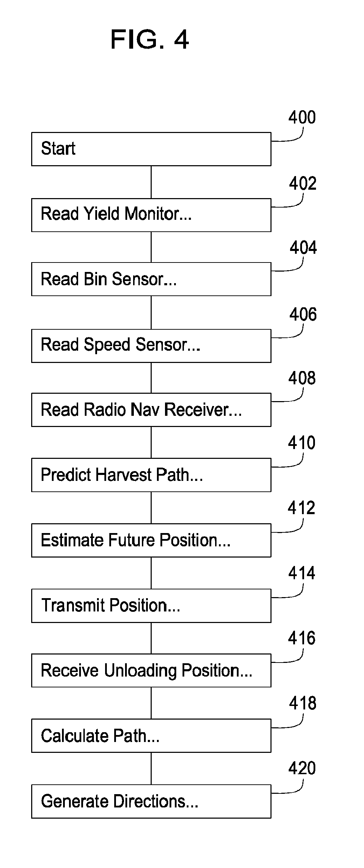

Figure 4 is a flow chart of a first mode of operation of the navigation system. In step 400, the process starts.

In step 402, the electronic control circuit 200 reads the yield monitor and determines the time rate of fill of the storage structure 124.

In step 404, the electronic control circuit 200 reads the bin sensor and determines the level of the crop (i.e. the fill level) in storage structure 124.

In step 406, the electronic control circuit reads the speed sensor 230 to determine the field speed (i.e. the time rate of vehicle travel through the agricultural field) of the agricultural harvester 104.

In step 408, the electronic control circuit 200 reads the radio navigation receiver 320 and determines the position of the agricultural harvester 104 in the field 100.

In step 410, the electronic control circuit 200 combines the foregoing information together with the width of the agricultural harvesting head extending across the front of the agricultural harvester 104 in order and predicts the future path of the agricultural harvester 104 in the field 100. The width of the agricultural harvesting head defines the maximum width of the swathe of crop that is harvested with each pass of the agricultural harvester 104. The width of the swathe defines the distance between adjacent segments of path 106 that are followed by agricultural harvester 104 as it travels through the field 100.

This calculation is performed using data previously stored in the memory circuits of electronic control circuit 200, in particular electronic models of the agricultural field showing the extent of the field, the path previously followed by the agricultural harvester 104 (and therefore that portion of the field 100 which has already been harvested and therefore will not beat reversed by the agricultural harvester 104 again), the remaining portion and the field that is currently unharvested (and therefore needs to be traversed by agricultural harvester 104). These models are continually updated as the agricultural harvester 104 travels through the field harvesting crop. Using this information, and the width of the harvesting head (which is stored in one of the memory circuits of electronic control circuit 200) agricultural harvester 104 can determine the path it will follow through the field in order to completely harvest the crop.

Examples of path planning algorithms to provide complete coverage of an area are described in Jin, J, Ting, L., Optimal Coverage Path Planning for Arable Farming in 2D Surfaces, ASABE 53(1) 283-295, 2010; Spekken, M., Bruin, S., Optimizing Routes on Agricultural Fields Minimizing Maneuvering and Servicing Time, Precision Agriculture, 411-425, 2011; Ali, O, Verlinden B., Van Oudheusden, Infield Logistics Planning for Crop-Harvesting Operations, Engineering Optimization, Vol. 41., No. 2, pp183-197, Feb. 2009; and Bochtis, D., Vougioukas, S., Tsatsarelis, C., Ampatzidis, Y., Field Operation Planning for Agricultural Vehicles: A Hierarchical Modeling Framework, Agricultural Engineering International; the CIGR Ejournal, Manuscript PM 06 021, Vol. IX, Feb 2007, all of which references are incorporated herein by reference for all that they teach.

In step 412, the electronic control circuit 200 estimates the position along the predicted path at which the storage structure 124 will be filled to a predetermined level at which it should be unloaded.

To do this, electronic control circuit 200 combines data indicating the rate at which new crop is being poured into the storage structure 124 (provided by the yield monitor 228), data indicating the current level of crop in the storage structure 124 (provided by the bin sensor 232), and the speed of the agricultural harvester 104 through the field (provided by the speed sensor 230), and based upon these measurements, determines how much farther along the calculated path the agricultural harvester 104 will travel until the storage structure 124 is filled to its unloading level. In step 414, electronic control circuit 200 transmits the position it determined in the foregoing steps (the unloading location) to the cart 108 using the radio transmitter/receiver 234.

In step 416, the electronic control circuit 300 of cart 108 receives the unloading location transmitted by the agricultural harvester 104.

In step 418, the electronic control circuit 300 calculates a path to the unloading location. Typical path planning algorithms acceptable for this task can be found in Dantzig, G.B. and Ramser, J.H., (1959) "the Truck Dispatching Problem", Management Science, Vol. 6, No.1, pp. 80-91; Braysay, O., (2003): "A reactive variable neighborhood search for the vehicle routing problem with time windows", INFORMS Journal Computing, Vol. 15, pp. 347-368; and Bodin, L.D., (1990), "Twenty years of routing and scheduling", Operations Research, Vol. 38, pp. 571-579, all of which are incorporated herein by reference for all that they teach.

The electronic control circuit 300 uses the location of the cart 108 provided by radio navigation receiver 320 and the speed of the cart 108 provided by the speed sensor 330 to determine a preferred path to be followed by the cart 108 to the unloading location.

In step 420, the electronic control circuit 300 generates driving directions that indicate how the operator of the cart 108 should follow the preferred path calculated in step 418 and shows these driving directions to the operator of the cart 108 on visual display 324.

These driving directions indicate to the operator of the cart 108 the direction in which to steer the cart 108. These driving directions are turn-by-turn driving directions indicating where and how much the operator should turn the cart 108. When the operator of the cart 108 follows these driving directions, the operator will arrive at the unloading location at a time that coincides with the arrival of the agricultural harvester 104.

In one embodiment of the invention, the electronic control circuit 300 generates the driving directions and displays the turn by turn driving directions to the operator. As long as the operator follows those driving directions he will arrive on time that the unloading location.

In an alternative embodiment, the electronic control circuit 300 loops through steps 418 and 420 at intervals during the time the operator drives the cart 108 to the unloading location of the agricultural harvester 104. Each time electronic control circuit 300 executes this loop, the electronic control circuit 300 recalculates the driving directions it provides to the operator, using the position of the cart 108 provided by radio navigation receiver 320 as the revised starting point each time it iterates steps 418 and 420.

This recalculation of the preferred path and the driving directions accommodates operator error produced by the operator when the operator does not exactly follow the directions of electronic control circuit 300 as the operator drives through the field. Since the operator may not follow the exact driving directions, and therefore is not at the optimum position at every point in the field it would be beneficial to provide updated driving directions, preferably including changed turn-by-turn driving directions that will return the cart 108 to an optimum course for on-time arrival at the unloading location.

The driving directions provided to the operator by electronic control circuit 300 may also include speed directions indicating the speed at which the operator should travel as he follows the turn-by-turn driving directions. The speed directions are calculated by electronic control circuit 300 such that if the speed directions are followed accurately, the cart 108 will arrive that the unloading location at the same time as the agricultural harvester 104. The speed directions would also be recalculated in the alternative embodiment discussed above. Thus, in the alternative embodiment, the electronic control circuit 300, looping periodically through steps 418 and 420 as it travels to the agricultural harvester 104 provides revised turn-by-turn driving directions as well as revised speed directions.

In the embodiment of Figure 4 described above, the agricultural harvester 104 monitors various sensors on the vehicle and, based upon the values provided by those sensors, calculates an unloading location, which it then transmits to the cart 108.

Depending upon the bandwidth of the radio communications between the agricultural harvester 104 and the cart 108, this process of navigation can be improved by the electronic control circuit 200 repeatedly calculating an unloading location for the agricultural harvester 104 as electronic control circuit 200 receives revised information from its associated sensors.

The unloading location is a prediction of the field location of the agricultural harvester 104 when the amount of crop in the storage structure 124 reaches a predetermined level. It is therefore based upon a prediction of how much the agricultural harvester 104 will harvest.

It may be, however, that having calculated an initial unloading location and transmitted that initial unloading location to the cart 108 (in step 414), that the agricultural harvester 104 harvests less or more grain than it had earlier anticipated and upon which it had earlier based its calculation of the initial unloading location which it previously transmitted to the electronic control circuit 301 on the cart 108 in step 414.

Better performance is provided by electronic control circuit 200 in an alternative arrangement by electronic control circuit 200 periodically looping through steps 402-412 as the agricultural harvester 104 travels through the field, continually revising its unloading location as it receives more grain and gets closer to the ultimate unloading location.

By looping through steps 402-412, the electronic control circuit 200 provides a succession of revised estimated unloading locations each of these estimated unloading locations being more accurate than the previous estimated unloading locations as the agricultural harvester 104 gathers more grain.

It would be beneficial to provide these revised estimated unloading locations at periodic intervals to electronic control circuit 300 on cart 108 and for electronic control circuit 300 to recalculate the path it should travel to the agricultural harvester 104 based upon these revised estimated unloading locations. In order to do this, the electronic control circuit 300 of the cart 108 is configured in another mode of operation to receive and to use the new revised estimated unloading locations as each is a periodically transmitted by electronic control circuit 200 and to periodically recalculate the turn-by-turn driving directions (and speed directions, if any) that the electronic control circuit 300 provides to the operator on visual display 324 by when electronic control circuit 300 loops through steps 416-420.

In the examples above, the agricultural harvester 104 includes an electronic control circuit 200 that monitors various sensors and calculates an estimated unloading location of the agricultural harvester 104. This arrangement requires a substantial computing capacity of the agricultural harvester 104. Some agricultural harvesters 104 may not have this computing capacity. Instead, they may only be able to gather sensor data and transmit that sensor data.

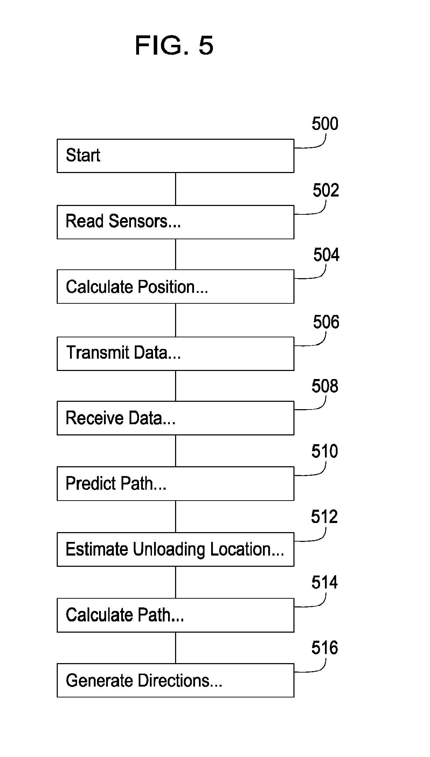

For this reason, an alternative embodiment of the process is provided in Figure 5, in which the agricultural harvester 104 does not calculate the unloading location and transmit that information to the cart 108. Instead, the cart 108 receives the appropriate sensor data from the agricultural harvester 104 in steps 402 through 408, skips the steps of 410 and 412, and in step 414 transmits not the unloading position of the agricultural harvester 104 but the sensor data that the agricultural harvester 104 gathered. This sensor data is received by electronic control circuit 300, which in turn predicts the path of the agricultural harvester 104 in step 410 and estimates the future position of agricultural harvester 104 in step 412.

The process is the same as that illustrated in Figure 4. With the exception that the steps of predicting the path in estimating the future position are performed by the electronic control circuit 300 instead of the electronic control circuit 200.

In step 502, the electronic control circuit 200 reads the yield monitor 228, the speed sensor 230, the bin sensor 232, and the radio navigation receiver 220.

In step 504, the electronic control circuit 200 calculates the position of the agricultural harvester 104 based upon the signal from the radio navigation receiver 220.

In step 506, the electronic control circuit 200 transmits the sensor data and the location of the agricultural harvester 104 using its radio transmitter/receiver 234.

In step 508, the electronic control circuit 300 receives the sensor data and the location of agricultural harvester 104 using its radio transmitter/receiver 334.

In step 510, the electronic control circuit 300 combines the information it received from agricultural harvester 104 (including harvesting head width) in order to predict the future path of the agricultural harvester 104 in the field 100. This path prediction is performed in the same manner as it is performed in the example of Figure 4, above.

In step 512, electronic control circuit 300 estimates the unloading location, the position all along the predicted path of agricultural harvester 104 at which the storage structure 124 will be filled to the unloading level. This unloading location is calculated identically to the way described above in conjunction with Figure 4.

In step 514, the electronic control circuit 300 calculates a path to the unloading location. This path is calculated identically to the way described above in conjunction with Figure 4.

In step 516, the electronic control circuit 300 generates driving directions for the operator of the cart 108 to drive the cart to the unloading location. These driving directions are calculated in the same manner as described above in conjunction with Figure 4.

Just as in the example of Figure 4, in an alternative mode of operation electronic control circuit 300 is configured to periodically and automatically recalculate the driving directions it displays on visual display 224 to accommodate the changing position of the vehicle and any operator error as the operator drives the cart 108 toward the estimated unloading location of agricultural harvester 104.

Just as in the example of Figure 4, in an alternative mode of operation, electronic control circuit 200 is configured to periodically perform the steps 502, 504, 506 while the operator is driving the cart 108 toward the agricultural harvester 104. In this manner, the electronic control circuit 300 of the cart 108 is provided with updated information regarding the status of agricultural harvester 104 as it is traveling tour the agricultural harvester 104. In this embodiment, the electronic control circuit 300 of the cart 108 is configured to not only periodically we calculate the driving directions to the agricultural harvester 104 in view of operator error, but also to recalculate the unloading location of agricultural harvester 104 in the field 100 as the operator is driving the cart 108 to the agricultural harvester 104 for unloading.

In another alternative embodiment, the process of estimating the unloading location is based on a historical yield in the field. In any of the examples above regarding the calculation of the unloading location, whether it is performed by the electronic control circuit 200 or electronic control circuit 300, the calculation can be performed by referring to historical yield data.

When calculating the unloading location by referring to historical yield data, the electronic control circuit (200 or 300) determines the location of the agricultural harvester 104, determines the remaining capacity of the storage structure 124 based upon a signal from the bin sensor 232, and refers to historical yield data for the field to determine how much farther the agricultural harvester 104 can travel along its predicted path before the storage structure 124 reaches its predetermined fill level, and must be unloaded.

In one arrangement, a single value of yield-per-acre may be provided for the entire field and stored in electronic memory of the electronic control circuit performing the calculation. If this single valued yield-per-acre algorithm is used by the electronic control circuit, the distance to the unloading location from the current location can be determined by simple algebra: the additional volume of crop necessary to fill the storage structure 124 is converted to a linear distance traveled by calculating the surface area of the field (the acreage) necessary to fill the storage structure 124, and then dividing that by the width of the harvesting head. The resulting figure is equal to the linear distance traveled along the path to reach the unloading location. These calculations are performed by whichever electronic control circuit (200 or 300) is described above as performing the step of calculating the unloading location.

In another alternative embodiment, a single value for the agricultural field is not used. Instead, a two dimensional yield map is provided and stored inside the electronic control circuit (200 or 300) described above. The yield-per-acre is determined by using a succession of locations of the agricultural harvester as it travels along its predicted path to look up corresponding yield values in the yield map. This provides a more accurate estimation of the yield, but requires additional calculations.

These two methods of using historical yield values (i.e. either a single value for the entire field or multiple values expressed in the yield map as a function of field location) can either replace or be combined with the signal from the yield monitor 228. For example, if the actual yield through the field is larger than the historical yield a variety of locations within the field, then a ratio of the average actual yield over the average historical yield can be multiplied by each of the historical yield values in the yield map. These modified yield map values can then be used instead of the raw yield map values to calculate the unloading location of the agricultural harvester 104.

In another alternative embodiment, instead of (or in addition to) providing turn-by-turn driving directions and/or speed directions to the operator of the cart 108, as described above in conjunction with Figures 4 and 5 or any of the alternative embodiments also described above, electronic control circuit 300 can be configured to calculate the path of the cart 108 to the agricultural harvester 104, and to automatically signal the steering actuator 350 to drive the steering mechanism 352 to steer the cart 108 on to the proper path. This alternative embodiment is applicable to any of the above embodiments are alternates described in which the turn-by-turn driving directions or speed directions are provided to the operator.

In all the embodiments above, radio communication between radio transmitter/receiver 234 and radio transmitter/receiver 334 has been dep21011scribed as transmitting information from the agricultural harvester 104 to the cart 108. The types of radio communication may include long range radio telecommunications such as satellite telecommunications (e.g. Globalstar, Iridium, Orbcomm, Inmarsat, Thuraya) intermediate range radio telecommunications such as cell phones, and short range radio telecommunications such as Bluetooth, WIFI, MIFI, or any successor long range, intermediate range, or short range radio telecommunications.

## Claims

1. A system for coordinating the relative movements of an agricultural harvester (104) and a cart (108), the system comprising:
a first electronic control circuit (200) on an agricultural harvester (104) configured to receive status signals from sensors (222, 228, 230, 232) indicative of a physical status of the agricultural harvester (104);
a first radio navigation receiver (220) coupled to the first electronic control circuit (200), wherein
the radio navigation receiver (220) is configured to receive radio navigation signals and to provide a first location signal indicative of a current location of the agricultural harvester (104) to the first electronic control circuit (200);
a first radio transmitter/receiver (234) coupled to the first electronic control circuit (200), wherein
the first radio transmitter/receiver (234) is configured to transmit first status data of the agricultural harvester (104);
a second electronic control circuit (300) on a cart (108) configured to receive signals from sensors indicative of a physical status of the cart (108); and
a second radio transmitter/receiver (334) coupled to the second electronic control circuit (300),
wherein the second radio transmitter/receiver (334) is configured to receive the first status data from the first radio transmitter/receiver (234);
wherein the second electronic control circuit (300) is configured to calculate a path to be followed by the cart (108).

2. The system of claim 1, wherein the first status data is derived from the first location signal.

3. The system of claim 2, wherein the first status data includes a location of the agricultural harvester (104).

4. The system of claim 3, wherein the first status data includes a predicted location of the agricultural harvester (104), wherein the predicted location is generated by the first electronic control circuit (200).

5. The system of claim 1, wherein the first radio transmitter/receiver (234) is configured to sequentially transmit each of a plurality of first status data while the cart (108) is traveling from an unload location to the agricultural harvester (104), wherein the second radio transmitter/receiver (334) is configured to sequentially receive each of said plurality of first status and to sequentially provide each of said plurality of first status data to the second electronic control circuit (300), wherein the second electronic control circuit (300) is configured to calculate a new path for the cart (108) to follow upon receipt of each of said plurality of first status data.

6. The system of claim 5, wherein said each of a plurality of first status data comprises sensor data at least indicative of an amount of crop in a storage structure (124) of said agricultural harvester (104).

7. The system of claim 5, wherein said each of a plurality of first status data comprises data at least indicative of an actual position of said agricultural harvester (104) in said field.

8. The system of claim 5, wherein said first electronic control circuit (200) is configured to sequentially calculate a series of unload locations of said agricultural harvester (104) and further wherein said each of a plurality of first status data comprises data indicative of each location of said series of unload locations.

9. The system of claim 8, wherein said first electric chronic control circuit (200) is configured to sequentially calculate the series of unload locations at the same time as said cart (108) is traveling toward said agricultural harvester (104).

10. The system of claim 5, wherein the second electronic control circuit (300) is configured to calculate new driving directions for the operator in order to maintain the cart (108) on said new path.

11. The system of claim 10, wherein the second electronic control circuit (300) is configured to display the new driving directions on a visual display (324).

12. The system of claim 5, further comprising wherein the second electronic control circuit (300) is configured to predict a new unload location of the agricultural harvester (104) in response to receiving each of said plurality of first status data from the second radio transmitter/receiver (334).

13. The system of claim 1, further comprising a steering actuator (350) coupled to the second electronic control circuit (300) and configured to steer the cart (108).

14. The system of claim 13, wherein the second electronic control circuit (300) is configured to steer the cart (108) along the path calculated by the second electronic control circuit (300).
